# NEUE EUROPÄISCHE PATENTSCHRIFT

(11) **EP 2 341 271 B2**
(45) Veröffentlichungstag und Bekanntmachung des Hinweises auf die Entscheidung über den Einspruch: **18.05.2022**
(45) Hinweis auf die Patenterteilung: 21.08.2013
(21) Anmeldenummer: 10195099.6
(22) Anmeldetag: 15.12.2010
(51) Int. Cl.: F16L 13/14

(54) **Axialpressfitting**
Axial press fitting
Raccord à presser axial

(30) Priorität: 29.12.2009 DE 102009060847
(43) Veröffentlichungstag der Anmeldung: 06.07.2011
(73) Patentinhaber: TECE GmbH, 48282 Emsdetten (DE)
(72) Erfinder: Krabbe, Martin, 48341 Altenberge (DE); Smit, Frank, 48432 Rheine (DE); Altepost, Olaf, 48282 Emsdetten (DE)
(74) Vertreter: Lippert Stachow Patentanwälte Rechtsanwälte

(56) Entgegenhaltungen:
- EP-A1- 1 288 554
- EP-A1- 2 096 141
- EP-A2- 0 163 386
- EP-A2- 2 093 469
- WO-A1-93/00210
- DE-A1- 10 130 003
- DE-U1- 29 503 019
- DE-U1- 29 700 666
- DE-U1- 29 814 222
- JP-A- H1 024 492
- JP-A- H11 165 338
- JP-A- H11 277 640
- JP-A- 2003 072 828
- JP-A- 2009 013 343
- US-B2- 6 984 694
- I Moura et al: "Synthesis of Biogradable Copolymers based on Ethylene Vinyl Acetate and Polylactic Acid", Materials Science Forum, vol. 636-637 , pages 819-824,
- A. S. M. Elhassan: "Modification of PLA with Chain Extender", Applied Mechanics and Materials, vol. 716-717, 2015, pages 44-47,
- R F Grossman et al: "Poly(lactic acid) Synthesis, Structures, Properties, Processing and Applications", Wiley series on polymer engineering and technology,
- V H Orozco et al: "Preparation and Characterization of Poly(Lactic Acid)-g-Maleic Anhydride + Starch Blends", Macromol. Symp., vol. 277, 2009, pages 69-80,
- M Avella et al: "Poly(lactic acid)-Based Biocomposites Reinforced with Kenaf Fibers", Journal of Applied Polymer Science, June 2008 (2008-06), pages 3542-3551,
- V Frenz et al: "Multifunctional Polymers as Chain Extenders and Compatibilizers for Polycondensates and Biopolymers", ANTEC, pages 1682-1686,

## Beschreibung

Die Erfindung betrifft ein Axialpressfitting mit mindestens einem sich entlang einer Längsachse erstreckenden Rohrstutzen, der ein zum Einsetzen in ein Rohr ausgebildetes Vorderende und ein Hinterende mit einem kragenartigen Ansatzelement für eine Presszange aufweist, welches sich im Wesentlichen quer zu der Längsachse des Anschlussstutzens erstreckt und um welche eine Presszange umgreifend angesetzt werden kann zum Verpressen einer auf das Rohr aufgesetzten Schieberhülse. Beim Verpressen wird eine mediendichte Verbindung mit dem Rohr realisiert. Das Rohr weist ein zum Einsetzen des Rohrstutzens aufgeweitetes Ende auf und die aufgesetzte Schieberhülse liegt direkt an dem Rohr an.

Axialpressfittings sind zum Beispiel als Schmiedeteil, als Gussteil oder vorzugsweise auch als Kunststoffspritzgussteil ausgebildet und sind in der Praxis in vielfältigen Ausführungen bekannt, beispielsweise als einfaches zylindrisches Bauteil zur Verlängerung oder Verbindung von Rohrleitungen, um zwei Abschnitte derselben Rohrleitung miteinander zu verbinden oder auch beispielsweise als T-förmiges oder Y-förmiges Abzweigbauteil.

Die Rohrstutzen, die ein derartiges Fitting aufweisen kann, können entweder dazu dienen, in das Ende einer Rohrleitung eingesteckt zu werden.

Axialpressfittings werden auch als Schieberhülsensystem bezeichnet. Der Verbau oder die Verbindung mit dem Rohr erfolgt üblicherweise folgendermaßen: Zunächst wird die Schieberhülse auf das freie Ende eines Rohres aufgeschoben, das vorzugsweise als Verbundrohr ausgebildet ist. Sodann wird das freie Ende des Rohres aufgeweitet, so dass dieses auf den Rohrstutzen des Axialpressfittings aufschiebbar ist. Der Rohrstutzen weist dazu vorzugsweise mehrere entlang der Längsachse beabstandet zueinander angeordnete sägezahnartige radial von der äußeren Mantelfläche abragende Vorsprünge auf, welche sich in Einbaulage in die Innenwand des Rohres pressen. Das Stirnende des Rohres wird möglichst gegen das als radial umlaufender Kragen ausgebildete.. Ansatzelement geschoben. Sodann wird eine Presszange so auf das Axialpressfitting aufgesetzt, so dass das erste Zangenglied gegen das häufig auch als Presskragen bezeichnete Ansatzelement und das zweite Zangenglied die Schieberhülse an den voneinander abgewandten Enden hintergreift. Beim Zusammendrücken der Presszange wird die Schieberhülse sodann axial in Richtung des Endes des Rohres auf das Ansatzelement zugeschoben, bis die Schieberhülse mit ihrem vorderen Ende gegen das Ansatzelement anliegt. Beim Aufschieben der Schieberhülse auf das Rohr wird die mediendichte Verbindung zwischen dem Anschlussstutzen und der Innenseite des Rohrs realisiert und das Rohr ist in Einbaulage unverlierbar und mediendicht auf dem Axialpressfitting fixiert.

Im Gegensatz dazu sind Radialpressfittungs bekannt, wobei mittels einer Presszange eine ausschließlich radial einwärts gerichtete Kraft auf eine verformbare Presshülse ausgeübt wird. Radialpressfittings sind beispielsweise aus DE 298 12 222 U1 und DE 297 00 666 U1 bekannt. Ferner sind auch gattungsfremde Fittings mit komplexen Doppelhülsen bekannt, bei denen durch axiales Aufschieben einer äußeren Hülse, die nicht direkt an dem zu verbindenden Rohr anliegt, auf eine innere Hülse, eine radiale Kraft auf das Rohr bewirkt wird. Derartige Fittings sind aus EP 2 093 469 A2 und EP 1 288 554 A1 bekannt.

Obgleich derartige Axialpressfittings zunehmend eingesetzt werden, sind sie doch mit einem entscheidenden Nachteil verbunden. Das Ansatzelement bzw. der Presskragen bestimmt nämlich erheblich die Größe des Bauteils und die Menge des für die Fertigung benötigen Materials. Das Ansatzelement ist das Bauteil, welches die wesentlichen beim Verpressen auftretenden Kräfte der Presszange aufnimmt. Dabei treten zum Einen Schubkräfte, aber auch ganz erhebliche Biegekräfte an der Verbindung des Ansatzelements mit der Wandung des Axialpressfittings auf, die im Ergebnis dazu führen, dass die Wand oder Mantelfläche des Axialpressfittings wesentlich dicker oder stärker ausgebildet werden muss, als für den Normalbetrieb erforderlich wäre, wobei eigentlich nur geringe Kräfte auf das Bauteil wirken. Dieses beeinflusst den Druckverlustbeiwert (Zeta-Wert) und damit die gesamten Strömungseigenschaften des Axialpressfittings negativ.

Insbesondere bei Guss- und Spritzgussteilen kühlt der eine Materialanhäufung darstellende Ansatzelement wesentlich langsamer ab als die zylindrische Mantelfläche des Rohrstutzens bzw. des übrigen Fittings. Dieses oder eine Bildung von Lunkern kann Eigenspannungen in dem Bauteil bewirken und die mechanischen Eigenschaften somit negativ beeinflussen. Allgemein sind Materialanhäufungen bei allen Bauteilen, insbesondere aber bei Kunststoffteilen problematisch, weil diese langsamer abkühlen und deswegen die Prozesszyklen negativ beeinträchtigen. Andererseits benötigt man aber gerade bei Kunststoffspritzgussteilen die Wandstärke des Ansatzelements für die Stabilität als Kraftangriffspunkt für die Presszange.

Als Kunststoffspritzgussteil ausgebildete Axialpressfittings werden vorzugsweise aus PPSU gefertigt, welches auch für den Einsatz im Trinkwasserbereich zugelassen ist. PPSU weist allerdings relativ schlechte mechanische Eigenschaften auf, so dass das Ansatzelement sowie der Rohrsstutzen und folglich auch dessen Wand wesentlich dicker ausgebildet werden muss, um die beim Verpressen auftretenden Kräfte aufnehmen zu können. PPSU muss zudem mit ca.400° Celsius gespritzt werden, was relativ lange Zykluszeiten für die Abkühlung bedingt. Eine geregelte Abkühlung ist aber andererseits zwingend notwendig zum Vermeidung der zuvor genannten Eigenspannungen Bauteil. Der Aushärtprozess bestimmt insofern wesentlich die Zykluszeit bei der Fertigung. Ein Axialpressfitting nach dem Oberbegriff des Anspruchs 1 ist aus der DE-A-101 30 003 bekannt.

Ausgehend von diesem Stand der Technik liegt der Erfindung die Aufgabe zugrunde, diese Nachteile zumindest teilweise zu vermeiden und ein gattungsgemäßes Axialpressfitting derart fortzubilden, dass die Produktqualität verbessert und die Zykluszeiten für Fertigung reduziert werden.

Gemäß der vorliegenden Erfindung wird die Aufgabe durch ein Axialpressfitting gelöst, mit mindestens einem Rohrstutzen, mit einem Rohr, das ein zum Einsetzen des Rohrstutzens aufgeweitetes Ende aufweist, und mit einer auf das Rohr aufgesetzten Schieberhülse, die direkt an dem Rohr anliegt, wobei sich der mindestens eine Rohrstutzen entlang einer Längsachse erstreckt und an einem Vorderende ausgebildet ist zum Einsetzen in das Rohr und ein Hinterende mit einem Ansatzelement für eine Presszange aufweist, um welches die Presszange umgreifend angesetzt werden kann zum Verpressen der auf das Rohr aufgesetzten Schieberhülse gegen das Ansatzelement unter mediendichtem Einschluss des Rohrs, wobei das Ansatzelement als getrennter Aufsatzring ausgebildet ist und wobei zwischen dem Rohrstutzen und dem Aufsatzring Verbindungsmittel vorgesehen sind.

Der überraschende Vorteil der vorgeschlagenen Lösung liegt darin, dass der getrennte Aufsatzring nahezu vollständig die beim Verpressen auftretenden Biegekräfte aufnimmt, ohne diese auf das Axialpressfitting zu übertragen. Aufgrund der vorgeschlagenen Ausbildung kann somit die Wandstärke der Mantelfläche des Rohrstutzens um bis zu 60% auf die minimal erforderliche Wandstärke reduziert werden, womit der Zeta-Wert deutlich verbessert und die Strömungseigenschaften vorteilhaft beeinflusst werden. Da der Aufsatzring auch getrennt gefertigt werden kann, bestimmt dieser und dessen Materialmenge nicht mehr entscheidend die Zykluszeit bei der Fertigung des Axialpressfittings. Die Verbindungsmittel zwischen dem Rohrstutzen und dem Aufsatzring sind vorzugsweise am hinteren Ende des Rohrstutzens ausgebildet.

Bei der bevorzugten Ausführungsform umfassen die Verbindungsmittel ein zwischen den korrespondierenden Bauteilen ausgebildeten Vorsprung, vorzugsweise einen einstückig angeformten Anschlag, der besonders bevorzugt an der äußeren Mantelfläche des Rohrstutzens angeformt ist und gegen welcher der Aufsatzring beim Verpressen anliegt. Eine alternative Ausführungsform sieht eine Sicke in einem der beiden Bauteile vor, in welche ein Vorsprung des anderen Bauteils rastend eingreift, um die Kräfte während des Verpressens aufzunehmen. Gemäß einer dritten Ausführungsform umfassen die Verbindungsmittel an den Bauteilen korrespondierend ausgebildete Gewindeelemente. Schließlich gehört es auch zum Rahmen der Erfindung, Rastmittel als Verbindungsmittel zwischen den korrespondierenden Bauteilen vorzusehen, welche die auftretenden Kräfte beim Verpressen aufnehmen können.

Durch die erfindungsgemäße Ausbildung ist es nunmehr auch erstmalig möglich, den Aufsatzring aus einem anderen Material als der Rohrstutzen auszubilden, insbesondere einem Material, welches verbesserte mechanische Eigenschaften gegenüber dem.Material des Rohrstutzens zur Aufnahme der beim Verpressen auftretenden Kräfte aufweist. Zum Beispiel kann der Aufsatzring aus einem glasfaserverstärkten Polyamid ausgebildet sein. Bei der Ausbildung des Axialpressfittings aus Kunststoff wird folglich der Wasser führende Anschlussstutzen aus PPSU gebildet und der Aufsatzring kann aus dem die verbesserten mechanischen Eigenschaften aufweisenden glasfaserverstärkten Kunststoff gefertigt werden. Dieses hat entscheidende Vorteile. Zum Einen kann der Aufsatzring wesentlich filigraner ausgebildet werden, als wenn dieser ebenfalls aus PPSU gefertigt würde. Zum Anderen ist glasfaserverstärktes Polyamid wesentlich kostengünstiger, als das für den Nahrungsmittelbereich zugelassene PPSU. Da aber gerade der Presskragen beim Stand der Technik bei der Fertigung besonders viel Kunststoffmaterial erfordert, reduziert die erfindungsgemäße Ausbildung die Materialkosten um bis zu 50%. So lässt sich durch die getrennte Ausbildung des Aufsatzrings auf glasfaserverstärktem Kunststoff der Außendurchmesser des Presskragens im Verhältnis zur Ausbildung aus PPSU um etwa die Hälfte reduzieren. Da der Aufsatzring nicht mit dem Medium Trinkwasser in Berührung kommt, können somit Werkstoffe verwendet werden, die keine Trinkwasserzulassung besitzen. Gerade Glasfaser verstärkte Kunststoffe, die sich für diesen Anwendungsfall aufgrund ihrer mechanischen Eigenschaften anbieten, können aufgrund der Gefahr von Faserauswaschungen meist nicht in Trinkwasser verwendet werden. Zudem ergeben sich erhebliche Kostenvorteile, da geeignete Kunststoffe ohne Trinkwasserzulassung ca. 80 - 90 % günstiger sind als PPSU.

Bei der Verwendung des Aufsatzringes auf einen Fitting aus Metall ergibt sich ein weiterer Vorteil: Bei einigen Axialpressfittings kommt es nach der Verpressung zu einem Kontakt zwischen dem Aluminium des Rohres und dem Presskragen am Fitting. Hierdurch kann es langfristig zu Kontaktkorrosionen am Rohr kommen. Um dieses zu vermeiden, wird teilweise ein loser Entkoppelungsring auf den Fittingstutzen geschoben. Bei Verwendung eines Aufsatzringes aus Kunststoff kann dieses Trennelement entfallen. Das Alu des Rohres kann nicht mit dem Fitting in Kontakt kommen.

Bestehende Werkzeuge, insbesondere die Presszange, können auch für das Verpressen des erfindungsgemäßen Axialpressfittings ohne Umgestaltung verwendet werden. So sind diese beispielsweise beidseitig von links oder rechts weiterhin aufsetzbar.

Die erfindungsgemäße Ausbildung ist besonders geeignet für Axialpressfittings größerer Dimensionen, weil diese beim Stand der Technik wegen ihrer relativen Größe besonders viel Material für die Fertigung des Presskragens erfordern und die Zykluszeiten damit wesentlich determinieren. Besonders geeignet ist erfindungsgemäße Ausbildung deshalb für Rohraußendurchmesser von 14-20 mm, aber auch bis zu 40 mm, in Einzelfällen sogar bis zu 63 mm Außendurchmesser.

Der Aufsatzring kann auch auf das Fitting aufsetzbar ausgebildet sein, z.B. als geteilter Aufsatzring mit z.B. einer U-Form oder als Schnappring.

Weitere Einzelheiten, Vorteile und Merkmale der Erfindung lassen sich dem nachfolgenden Teil der Beschreibung entnehmen, in denen ein bevorzugtes Ausführungsbeispiel des erfindungsgemäßen Axialpressfittings anhand von 15 Zeichnungen näher erläutert wird. Es zeigen:
- Figur 1: eine Seitenansicht einer ersten Ausführungsform des erfindungsgemäßen Axialpressfittings mit einem einteiligen Aufsatzring;
- Figur 2: einen Längsschnitt entlang der Linie A-A gemäß Figur 1;
- Figur 3: einen Querschnitt des Pressfittings entlang der Linie B-B gemäß Figur 1;
- Figur 4: eine Frontansicht der ersten Ausführungsform des Aufsatzrings;
- Figur 5: eine Seitenansicht einer zweiten Ausführungsform des erfindungsgemäßen Axialpressfittings;
- Figur 6: einen Längsschnitt entlang der Linie A-A gemäß Figur 5;
- Figur 7: einen Querschnitt entlang der Linie B-B gemäß Figur 5;
- Figur 8: eine Frontansicht der zweiten Ausführungsform eines Aufsatzrings;
- Figur 9: eine Seitenansicht einer dritten Ausführungsform des erfindungsgemäßen Axialpressfittings;
- Figur 10: einen Längsschnitt entlang der Linie A-A gemäß Figur 9;
- Figur 11: einen Querschnitt entlang der Linie B-B gemäß Figur 9;
- Figur 12: eine Frontansicht der dritten Ausführungsform eines Aufsatzrings;
- Figur 13: eine Seitenansicht einer vierten Ausführungsform des erfindungsgemäßen Axialpressfittings;
- Figur 14: einen Längsschnitt entlang der Linie A-A gemäß Figur 13; und
- Figur 15: einen Querschnitt entlang der Linie B-B gemäß Figur 13.

Gleiche oder entsprechende Bauteile sind mit denselben Bezugszeichen versehen.

Demnach besteht das Axialpressfitting 2 im Wesentlichen aus einem kreiszylindrischen Hohlkörper mit konstanter Wandstärke, der an seinen äußeren Enden Rohrstutzen 4 aufweist. Der Rohrstutzen 4 weist an seinem Vorderende eine in bekannter Weise ausgebildete und einstückig angeformte Sägezahnstrukturen 8 auf, welche mit dem auf die Rohrstutzen 4 aufgeschobenen Verbundrohr 12 beim Verpressen eine mediendichte Verbindung eingeht.

Zur Realisierung dieser mediendichten Verbindung zwischen den Verbundrohr 12 und dem Fitting 2 wird eine kreisringförmige Schieberhülse 16, die einen geringfügig größeren Innendurchmesser als das Verbundrohr 12 aufweist, auf das aufgeweitete Ende des Verbundrohrs aufgeschoben. Dieses als "Verpressen" bezeichnete Aufschieben wird mittels einer bekannten und nicht dargestellten Presszange realisiert, welche zwei Backen aufweist, von denen eine erste die von den Rohrstutzen abgewandte Rückseite der Schieberhülsen 16 umgreift und die zweite die von dem Rohrstutzen 4 abgewandte Rückseite eines Aufsatzrings 18 umgreift.

Erfindungsgemäß ist der beim Stand der Technik üblicherweise weit radial nach außen ragende Presskragen ersetzt durch den kreisringförmig ausgebildeten Aufsatzring 18, der aus glasfaserverstärktem Kunststoff besteht und auf das Fitting 2 in einer Nut aufgeschnappt fixiert ist. In Einbaulage liegt der Aufsatzring 18 gegen einen radial von der Mantelfläche des Fittings 2 abragenden und einstückig angeformten Vorsprung 22 an, der sich an den Abschnitt mit der Sägezahnstruktur 8 anschließt. Da dieser Vorsprung 22 eigentlich nur die beim Verpressen auftretenden Schubkräfte und keine Biegespannungen aufnehmen muss, kann dieser wesentlich kleiner als die aus dem Stand der Technik bekannten Presskragen gestaltet sein. Üblicherweise ist eine Reduzierung der Größe um bis zu 60% und mehr realisierbar.

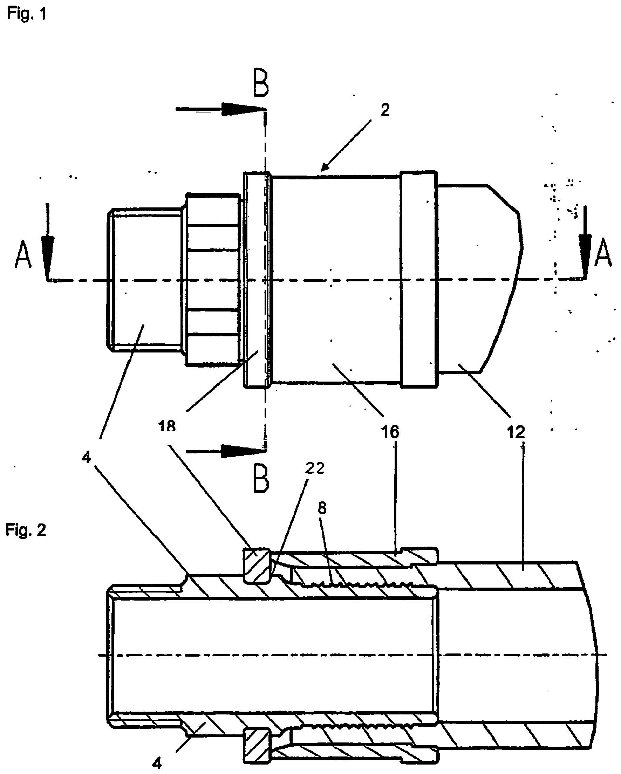

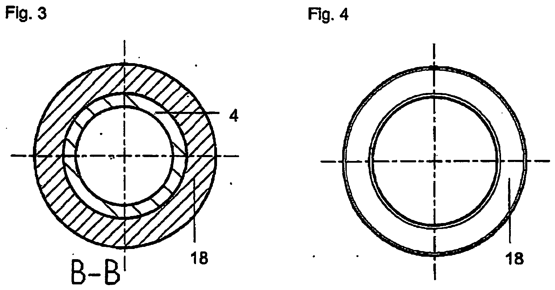

Die in den Figuren 1 bis 4 dargestellte erste Ausführungsform des vorgeschlagenen Axialpressfittings 2 zeichnet sich durch einen Aufsatzring 18 aus, der die Gestalt eines einstückig geschlossenen Kreisrings aufweist und dessen Innendurchmesser gerade so groß ist, dass er von der Rückseite auf das Fitting 2 aufgeschoben werden kann, bis dieser frontseitig in der umlaufenden Nut in der äußeren Mantelfläche des Fittings 2 gegen den Vorsprung 22 anliegt.

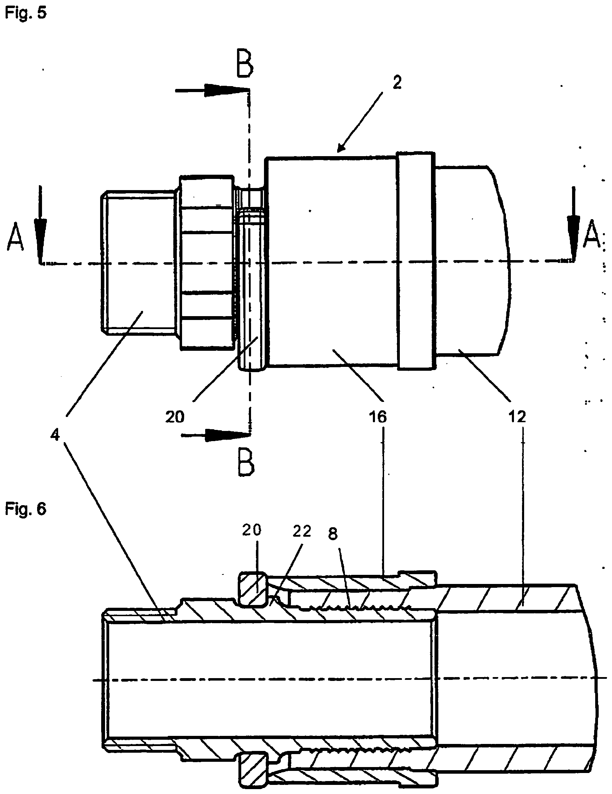

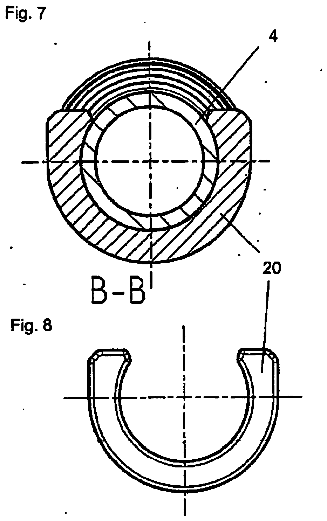

Bei der in den Figuren 5 bis 8 dargestellten zweiten Ausführungsform ist der Aufsatzring 20 nicht geschlossen, sondern als U-förmiges Schnappelement mit einem geringfügigen Hinterschnitt in der zentralen Öffnung ausgebildet, welches auf die umlaufende Nut des Fittings 2 zur Anlage an den Vorsprung 22 aufschnappbar ist.

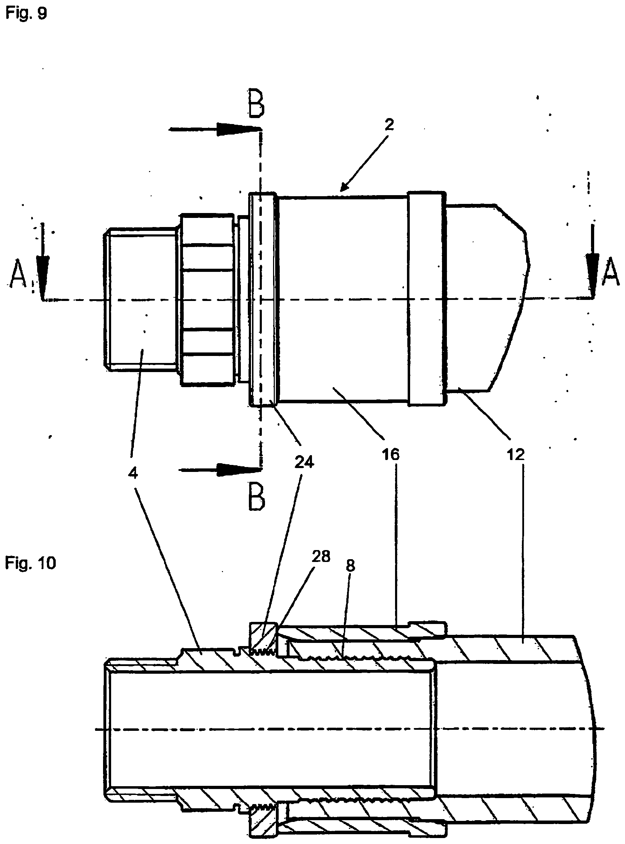

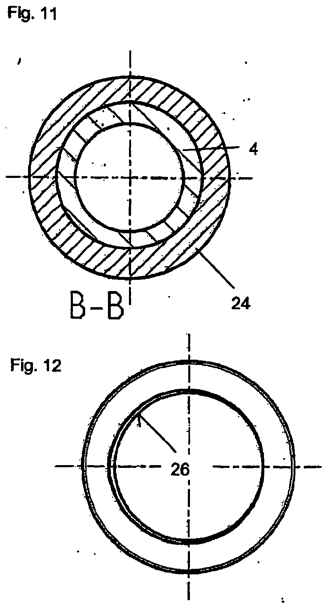

Die in den Figuren 9 bis 12 dargestellte dritte Ausführungsform des vorgeschlagenen Axialpressfittings 2 umfasst einen Aufsatzring 24, der auf seiner Innenseite ein Innengewinde 26 aufweist, das auf einen korrespondierend ausgebildeten Gewindeabschnitt des Fittings 2 mit einem korrespondierend ausgebildeten Außengewinde 28 aufsetzbar ist. Diese Ausführungsform benötigt demnach keinen Vorsprung 22 zur Anlage des Aufsatzrings 24 an dem Fitting 2.

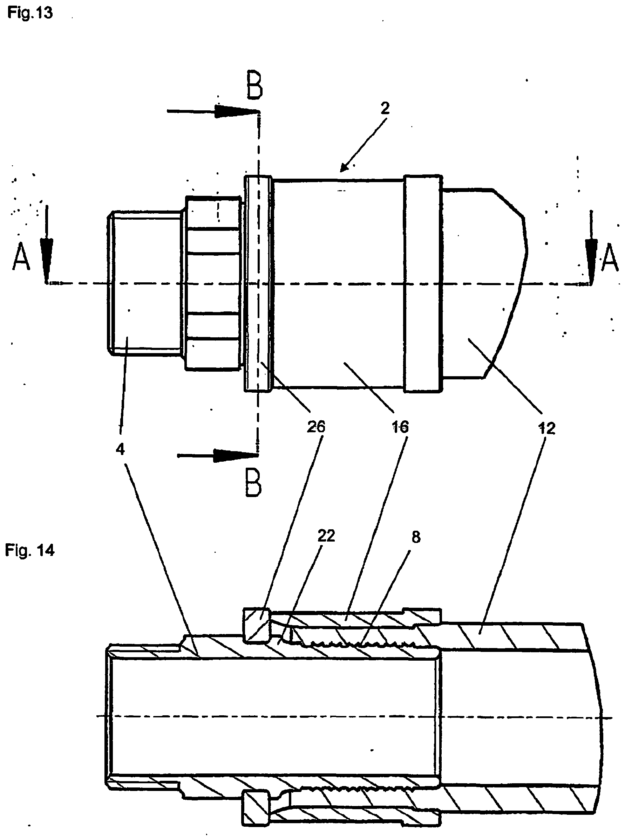

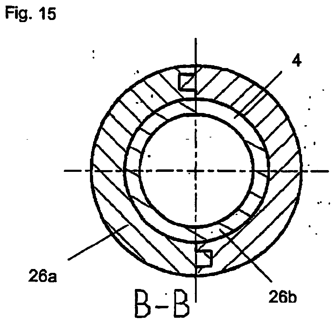

Bei der in den Figuren 13 bis 15 dargestellten vierten Ausführungsform des Axialpressfittings 2 ist der Aufsatzring 30 teilbar ausgebildet, bestehend aus einem in Fig. 15 linksseitigen Halbkreiselement 30a und einem rechtsseitig angeordneten zweiten Halbkreiselement 26b, die über in Verbindungslage konisch ineinandergreifende Nut-/Federverbindungen durch Verdrehen unverlierbar miteinander verbindbar. Diese Ausführungsform ist besonders einfach montierbar.

Die Aufsatzringe können erfindungsgemäß auch im 2K-Spritzgrussverfahren hergestellt werden. Es versteht sich von ferner, dass die vorgeschlagene Ausbildung nicht nur für einen in den Figuren dargestellte Ausführungsform des Fittings 2 beschränkt ist, sondern auch für Abzweigestücke jeglicher Art, also mit mehreren Rohrstutzen 4 einsetzbar ist. Ferner ist die Erfindung auch auf solche Ausführungsformen erstreckt, die Rohre unterschiedlicher Geometrien miteinander verbinden.

Der Gegenstand der vorliegenden Erfindung ergibt sich aus dem Gegenstand der Ansprüche.

### Bezugszeichenliste

- 2: Axialpressfitting
- 4: Rohrstutzen
- 6: Sägezahnstruktur
- 12: Verbundrohr
- 16: Schieberhülse
- 18: Aufsatzring
- 20: Aufsatzring
- 22: Vorsprung
- 24: Aufsatzring
- 26: Innengewinde
- 28: Außengewinde
- 30: Aufsatzring
- 30a: erstes Halbkreissegment
- 30b: zweites Halbkreissegment

## Patentansprüche

1. Axialpressfitting (2) mit mindestens einem Rohrstutzen (4), mit einem Rohr (12), das ein zum Einsetzen des Rohrstutzens (4) aufgeweitetes Ende aufweist, und mit einer auf das Rohr (12 aufgesetzten Schieberhülse (16), die direkt an dem Rohr (12) anliegt, wobei sich der mindestens eine Rohrstutzen (4) entlang einer Längsachse erstreckt und an einem Vorderende ausgebildet ist zum Einsetzen in das Rohr (12) und ein Hinterende mit einem Ansatzelement für eine Presszange aufweist, um welches die Presszange umgreifend angesetzt werden kann zum Verpressen der auf das Rohr (12) aufgesetzten Schieberhülse (16) gegen das Ansatzelement unter mediendichtem Einschluss des Rohrs (12), **DADURCH GEKENNZEICHNET, dass** das Ansatzelement als getrennten Aufsatzring (18, 20, 24, 30) ausgebildet ist und dass zwischen dem Rohrstutzen (4) und dem Aufsatzring (18, 20, 24, 30) Verbindungsmittel vorgesehen sind.

2. Axialpressfitting (2) nach Anspruch 1, **DADURCH GEKENNZEICHNET, dass** die Verbindungsmittel einen Vorsprung (22) umfassen.

3. Axialpressfitting (2) nach Anspruch 1, **DADURCH GEKENNZEICHNET, dass** die Verbindungsmittel eine Sicke umfassen.

4. Axialpressfitting (2) nach Anspruch 1, **DADURCH GEKENNZEICHNET, dass** die Verbindungsmittel ein Gewinde (26, 28) umfassen.

5. Axialpressfitting (2) nach Anspruch 1, **DADURCH GEKENNZEICHNET, dass** die Verbindungsmittel eine Rastverbindung umfassen.

6. Axialpressfitting (2) nach einem der vorhergehenden Ansprüche, **DADURCH GEKENNZEICHNET, dass** der Aufsatzring (18, 20, 24, 30) aus einem anderen Material als der Rohrsstutzen (4) besteht.

7. Axialpressfitting (2) nach einem der vorhergehenden Ansprüche, **DADURCH GEKENNZEICHNET, dass** dieses als Kunststoffspritzgussteil ausgebildet ist.

8. Axialpressfitting (2) nach Anspruch 7, **DADURCH GEKENNZEICHNET, dass** der Rohrsstutzen (4) PPSU und der Aufsatzring (18, 20, 24, 30) glasfaserverstärktes Polyamid aufweist.

9. Axialpressfitting (2) nach einem der vorhergehenden Ansprüche, **DADURCH GEKENNZEICHNET, dass** der Aufsatzring (18, 20, 24, 30) teilbar ist.

## Claims

1. Arrangement comprising an axial press fitting (2) with at least one pipe nozzle (4), a tube (12) having an expanded end for the insertion of the pipe nozzle (4), as well as a sliding sleeve (16) attached to said tube (12) directly contacting the tube (12), the at least one pipe nozzle extending along the longitudinal axis and having a front end adapted for insertion in the tube (12) and a rear end with an application element for pressing pliers to be applied there around for pressing the sliding sleeve (16) attached to said tube (12) against said application element under the inclusion of said tube (12) in a media-tight manner, **characterized in that** the application element is configured as a separate attachment ring (18, 20, 24, 30) and that between the pipe nozzle (4) and the attachment ring (18, 20, 24, 30) connecting means are provided.

2. Arrangement according to claim 1, **characterized in that** the connecting means comprise a protrusion (22).

3. Arrangement according to claim 1, **characterized in that** the connecting means comprise a bead.

4. Arrangement according to claim 1, **characterized in that** the connecting means comprise a thread (26, 28).

5. Arrangement according to claim 1, **characterized in that** the connecting means comprise a latching connection.

6. Arrangement according to one of the preceding claims, **characterized in that** the attachment ring (18, 20, 24, 30) consists of a material different from that of the pipe nozzle (4).

7. Arrangement according to one of the preceding claims, **characterized in that** the axial press fitting (2) is formed as a plastic injection-molded part.

8. Arrangement according to claim 7, **characterized in that** the pipe nozzle (4) comprises PPSU, and the attachment ring (18, 20, 24, 30) comprises glass-fiber reinforced polyamide.

9. Arrangement according to one of the preceding claims, **characterized in that** the attachment ring (18, 20, 24, 30) is separable.

## Revendications

1. Assemblage comprenant un raccord à presser axial (2) comprenant au moins une tubulure (4), un tuyau (12) présentant une extrémité évasée pour l'introduction de la tubulure (4), et un manche glissant (16) etant monté adhérant directement au tuyau (12), l'au moins une tubulure (4) s'étendant le long d'un axe longitudinal et présentant une extrémité avant agencée pour être installée dans le tuyau (12) et une extrémité arrière présentant un élément d'attache pour une pince à presser, autour lequel élément la pince peut être appliqué de manière enveloppant ledit élément afin de presser le manche glissant (16) monté sur le tuyau (12) contre l'élément d'attache sous l'inclusion du tuyau (12) de manière étanche par rapport au milieu, **caractérisé en ce que** l'élément d'attache est configuré comme une bague rapportée séparée (18, 20, 24, 30) et **en ce que** des moyens de jonction sont prévus entre le manche (4) et la bague rapportée (18, 20, 24, 30).

2. Assemblage selon la revendication 1, **caractérisé en ce que** les moyens de jonction comportent un épaulement (22).

3. Assemblage selon la revendication 1, **caractérisé en ce que** les moyens de jonction comportent une moulure.

4. Assemblage selon la revendication 1, **caractérisé en ce que** les moyens de jonction comportent un filet (26, 28).

5. Assemblage selon la revendication 1, **caractérisé en ce que** les moyens de jonction comportent une jonction à verrouillage.

6. Assemblage selon l'une des revendications précédentes, **caractérisé en ce que** la bague rapportée (18, 20, 24, 30) consiste en un matériau autre que celui de la tubulure (4).

7. Assemblage selon l'une des revendications précédentes, **caractérisé en ce que** le raccord à presser axial (2) est agencé comme une pièce plastique moulée par injection.

8. Assemblage selon la revendication 7, **caractérisée en ce que** la tubulure (4) comporte le PPSU et la bague rapportée (18, 20, 24, 30) comporte le polyamide renforcé de fibres de verre.

9. Assemblage selon l'une des revendications précédentes, **caractérisé en ce que** la bague rapportée (18, 20, 24, 30) est séparable.
